# FASCICULE DE BREVET EUROPEEN

(11) **EP 3 856 556 B1**
(45) Date de publication et mention de la délivrance du brevet: **27.09.2023**
(21) Numéro de dépôt: 19779533.9
(22) Date de dépôt: 29.08.2019
(51) Int. Cl.: B60H 1/24, F24F 13/24

(54) **DISPOSITIF D'INSONORISATION POUR UN FLUX D'AIR D'UN VEHICULE**
SCHALLSCHUTZVORRICHTUNG FÜR EINEN LUFTSTROM EINES FAHRZEUGS
SOUNDPROOFING DEVICE FOR AN AIR FLOW OF A VEHICLE

(30) Priorité: 25.09.2018 FR 1858751
(43) Date de publication de la demande: 04.08.2021
(73) Titulaire: PSA Automobiles SA, 78300 Poissy (FR)
(72) Inventeur: LORETTE, Frederic, 78960 VOISINS LE BRETONNEUX (FR); BERNARDINO, Pascal, 94350 VILLIERS SUR MARNE (FR)
(86) Numéro de dépôt international: PCT/FR2019/051993
(87) Numéro de publication internationale: WO 2020/065151

(56) Documents cités:
- DE-A1-102016 011 869
- JP-A- 2002 172 927
- US-A1- 2004 253 566
- US-A1- 2005 075 064
- US-A1- 2018 229 776

## Description

La présente invention concerne de manière générale un dispositif d'insonorisation pour un flux d'air d'un véhicule automobile.

Il est connu dans l'art antérieur des dispositifs d'insonorisation pour un flux d'air dans un véhicule, par exemple pour une bouche d'aération ou bien pour un extracteur d'air, comme décrit par le document FR3020608.

Les documents US20180229776, US20050075064, JP2002172927, US20040253566 et DE102016011869 décrivent des véhicules comportant des extracteurs d'air et des dispositifs d'insonorisation pour un flux d'air traversant les extracteurs.

En contrepartie, ce dispositif d'insonorisation présente l'inconvénient de nécessiter une fixation indépendante d'un élément de véhicule le recouvrant, rendant ainsi l'assemblage d'un habitacle de véhicule complexe.

Un but de la présente invention est de répondre aux inconvénients du document de l'art antérieur mentionnés ci-dessus et en particulier, de proposer un véhicule avec un dispositif d'insonorisation permettant de simplifier l'assemblage d'une portion d'un habitacle de véhicule.

Véhicule automobile comprenant un châssis pourvu d'une paroi définissant une ouverture, et un dispositif d'insonorisation pour un flux d'air entre un intérieur et un extérieur du véhicule. Le dispositif d'insonorisation comprend :
un boîtier monté sur l' ouverture de la paroi du véhicule,
l'ouverture permettant le passage du flux d'air entre l'intérieur et l'extérieur du véhicule,
le boîtier étant en outre agencé pour être traversé par ce flux d'air et pour procurer une insonorisation à l'intérieur du véhicule,
le boîtier comprenant au moins une interface de montage agencée pour recevoir un élément de véhicule.

Le dispositif d'insonorisation comprend en outre un extracteur d'air comportant au moins un élément mobile, par exemple comme des ailettes mobiles, agencé pour autoriser le flux d'air en cas de surpression dans l'intérieur du véhicule. Le boîtier comprend une ouverture occupée par ledit extracteur d'air. Par exemple, l'extracteur d'air autorise le passage d'un flux d'air uniquement en cas de surpression dans l'intérieur ou l'habitacle du véhicule. Le boîtier comprend une surface extérieure et une protrusion faisant saillie de la surface extérieure, une interface de montage est pourvue sur ladite protrusion, par exemple sur le sommet, de manière à recevoir un élément de véhicule, recouvrant le boîtier et/ou l'extracteur, l'élément de véhicule étant un élément de garnissage d'un intérieur du véhicule.

Un tel dispositif d'insonorisation permet de réaliser l'insonorisation d'un flux d'air de véhicule, par exemple lié à une bouche d'aération ou un extracteur d'air, tout en permettant le montage d'un ou plusieurs éléments de véhicule, ce qui permet de simplifier le montage d'un véhicule automobile comprenant un tel dispositif d'insonorisation.

Ainsi, la protrusion permet de décaler l'interface de montage par rapport à une surface extérieure supérieure ou extrémale du boîtier.

Un élément de véhicule peut donc être fixé au boîtier par la protrusion tout en dégageant un espace entre le boîtier et l'élément de véhicule, de manière à loger un autre élément de véhicule dans l'espace ainsi créé. L'autre élément de véhicule peut être un élément de confort ou de sécurité d'un véhicule, comme un boîtier électrique ou électronique lié à l'éclairage intérieur ou extérieur du véhicule, à une fonction de verrouillage ou de déverrouillage du véhicule ou encore à une interface de communication numérique du véhicule.

De manière spécialement avantageuse, la surface extérieure du boîtier comprend au moins une autre interface de montage agencée pour fixer au moins un autre élément de véhicule. Cette autre interface de montage peut être située sur la surface extérieure supérieure ou extrémale du boîtier, de manière décalée par rapport au sommet de la protrusion selon un axe transversal du boîtier ou du véhicule, de manière à permettre la fixation d'au moins un autre élément de véhicule entre l'élément de véhicule fixé sur la protrusion et le boîtier du dispositif d'insonorisation.

Un tel dispositif d'insonorisation permet de simplifier le montage d'un véhicule le comprenant du fait qu'il permet par exemple de réaliser une fonction d'insonorisation ainsi que le montage ou la fixation d'au moins un élément de véhicule et préférentiellement au moins deux éléments de véhicule.

Avantageusement, le boîtier comprend une couche de matériau insonorisant agencée en contact avec le flux d'air de manière à absorber au moins partiellement tout son transmis par le flux d'air. Par exemple, il peut s'agir d'un matériau fibreux et/ou en relief, d'une matière synthétique ou naturelle, par exemple du feutre. Cette couche de matériau insonorisant peut être fixée sur une surface intérieure du boîtier.

Avantageusement, le boîtier est configuré pour imposer au flux d'air un trajet non linéaire entre l'intérieur et l'extérieur du véhicule et comprend par exemple une surface intérieure définissant un coude ou une chicane.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de trois quarts d'une aile arrière droite d'un véhicule vue depuis l'intérieur du véhicule,
- la figure 2 représente un boîtier d'un dispositif d'insonorisation selon la présente invention,
- la figure 3 représente une vue de trois quarts d'un dispositif d'insonorisation selon la présente invention comprenant le boîtier de la figure 2 monté sur l'aile arrière de la figure 1,
- la figure 4 représente une vue de trois quarts de l'aile arrière droite du véhicule vue depuis l'extérieur du véhicule avec le dispositif d'insonorisation de la figure 3 ainsi qu'un élément de véhicule.

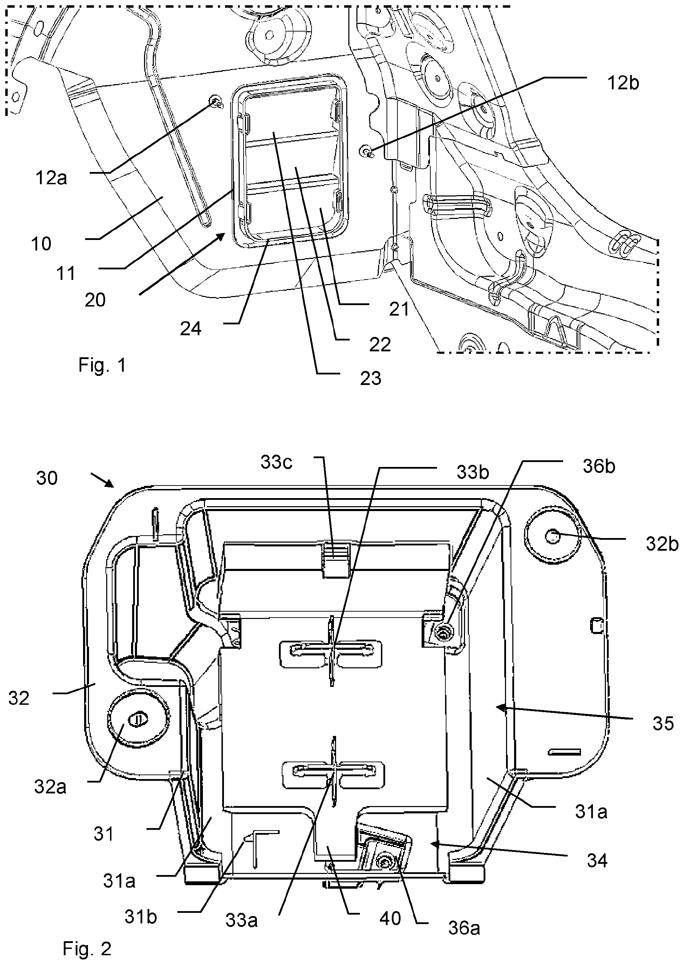

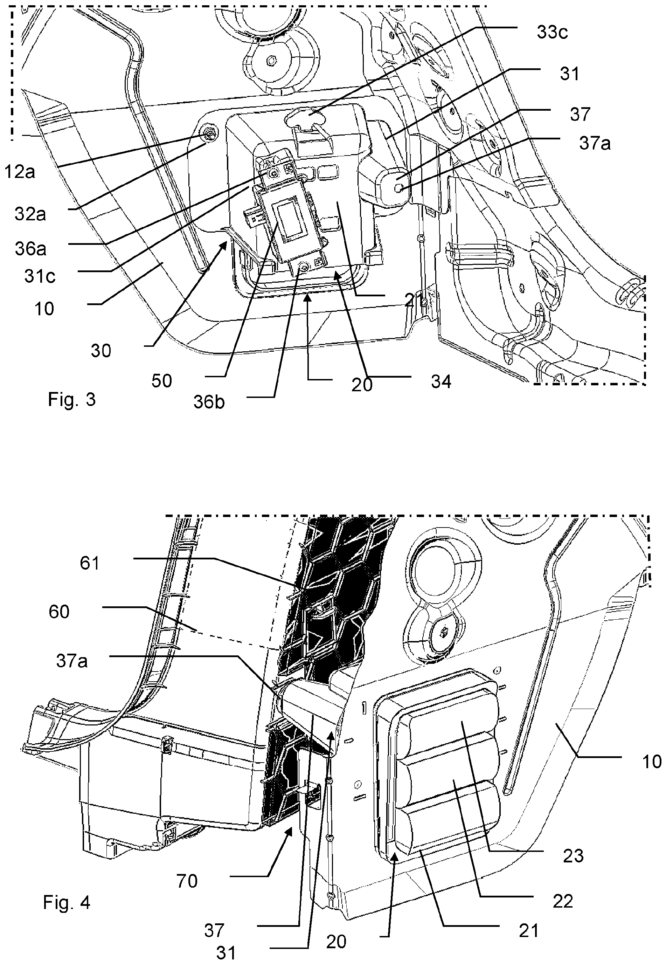

La figure 1 représente une vue d'un intérieur d'un châssis de véhicule au niveau de la malle arrière, c'est-à-dire une aile arrière droite d'un véhicule vue depuis l'intérieur du véhicule. L'aile arrière droite comprend ainsi une paroi 10 du véhicule pourvue d'une ouverture 11 occupée par un extracteur d'air 20 et permettant le passage d'un flux d'air entre l'intérieur et l'extérieur du véhicule, par exemple de l'intérieur vers l'extérieur (voir aussi la figure 4). En outre, la paroi 10 du véhicule comprend deux goujons 12a et 12b permettant d'accueillir un boîtier tel que décrit à la figure 2.

L'extracteur d'air 20 visible sur les figures 1 et 4 comprend au moins un élément mobile et par exemple trois ailettes mobiles 21, 22 et 23 fixées en liaison pivot au cadre 24 de l'extracteur d'air 20 de façon à permettre le passage d'un flux d'air de l'intérieur vers l'extérieur du véhicule et à bloquer au moins partiellement un flux d'air de l'extérieur vers l'intérieur du véhicule. Cet extracteur d'air 20 permet ainsi d'évacuer vers l'extérieur du véhicule une surpression d'air créée par exemple par la fermeture d'une porte ou bien par la ventilation du véhicule.

La figure 2 représente un boîtier 30 comprenant une paroi mince 31 ayant une surface intérieure 31a définissant un volume intérieur avec un fond 31b et une collerette 32 comprenant deux interfaces de fixation 32a et 32b sous la forme de trous traversants agencés pour recevoir les goujons 12a et 12b de la paroi 10 du véhicule. Dans le fond 31b du volume défini par la paroi mince 31, une couche de matériau insonorisant 40 est fixée à la surface intérieure 31a par des protrusions cruciformes 33a et 33b et par une ancre supérieure 33c traversant la paroi mince 31 (mieux visible sur la figure 3). Sur l'exemple de la figure 2, cette couche de matériau insonorisant comprend deux plans perpendiculaires l'un à l'autre, soit une forme coudée, et peut être constituée d'une matière synthétique ou naturelle telle que du feutre apte à absorber les sons transportés par le flux d'air ou transmis par l'extracteur d'air, venant par exemple de l'extérieur du véhicule.

En outre, ce boîtier 30 comprend deux plans ou faces ouvertes définissant des ouvertures dans la paroi mince 31. Une première ouverture 34 est située dans un premier plan transversal au fond du boîtier et à la collerette 32 et est destinée à être en communication avec l'intérieur du véhicule. De plus, une deuxième ouverture 35 est située dans un deuxième plan transversal ou perpendiculaire à la première ouverture 34 et est destinée à être en contact avec l'extracteur d'air 20 et en communication avec l'extérieur du véhicule, comme expliqué ci-après.

Cette deuxième ouverture 35 est située dans le même plan que la collerette 32 et ce plan est parallèle au fond 31b du volume intérieur du boîtier 30. L'orientation de la première ouverture 34 et de la deuxième ouverture 35 dans deux plans différents et par exemple orthogonaux permet de contraindre le flux d'air à un déplacement non linéaire à travers le boîtier 30 contribuant à un effet d'insonorisation.

Enfin, la paroi mince 31 présente une interface de montage 36a et 36b située dans le fond 31b du boîtier 30, à proximité de la couche de matériau insonorisant 40, sous la forme de trous traversants accessibles depuis la surface extérieure 31c de la paroi mince 31 (voir figure 3). Cette interface de montage 36a et 36b est destinée à recevoir un élément de véhicule, comme expliqué ci-après.

La figure 3 présente le boîtier 30 monté sur la paroi 10 du véhicule de manière à recouvrir partiellement l'extracteur d'air 20. Ainsi, les goujons 12a et 12b de la paroi 10 sont accueillis dans les interfaces de fixation 32a et 32b du boîtier 30. Le boîtier 30 est donc plaqué contre la paroi 10 de manière à ce que sa deuxième ouverture 35 soit en contact avec le cadre 24 de l'extracteur d'air 20 et au moins partiellement occupée par celui-ci. La première ouverture 34, orientée vers le bas du véhicule communique librement avec l'espace intérieur du véhicule. De ce fait, un flux d'air peut traverser le boîtier 30, par exemple en pénétrant par la première ouverture 34 et en s'échappant par la deuxième ouverture 35 à travers l'extracteur d'air 20 vers l'extérieur du véhicule.

De plus, un élément de véhicule 50 sous la forme d'un boîtier électronique est fixé sur la surface extérieure 31c de la paroi mince 31 du boîtier 30 grâce à deux vis ou boulons passés à travers les trous traversant de l'interface de montage 36a, 36b. Par exemple, cet élément de véhicule 50 peut être un boîtier électronique gérant les lumières ou feux arrière, un élément d'un système de verrouillage sans fil ou encore un boîtier électrique permettant d'alimenter une remorque connectée au véhicule.

Enfin, le boîtier 30 comprend une protrusion 37 faisant saillie par rapport à la surface extérieure 31c de la paroi mince 31 et munie d'une interface de montage 37a sous la forme d'un trou traversant sur le sommet de la protrusion 37 et destiné à fixer ou monter un élément de véhicule, comme expliqué ci-après. Cette interface de montage 37a peut donc être située de manière décalée ou supérieure selon un axe transversal du boîtier 30 ou du véhicule, par rapport à l'autre interface de montage 36a, 36b inférieure située sur la surface extérieure 31c de la paroi mince 31 et destinée à accueillir l'élément de véhicule 50.

Dans l'exemple représenté sur la figure 3, l'interface de montage 37a de la protrusion 37 et l'autre interface de montage 36a, 36b de la surface extérieure 31c sont situées dans deux plans pouvant être parallèles et/ou décalés axialement, par exemple selon un axe transversal du boîtier 31 ou du véhicule. En outre, le sommet de la protrusion 37 et l'interface de montage 37a sont agencés à une distance prédéterminée de la surface extérieure 31c et donc de l'autre interface de montage 36a, 36b. L'espace ainsi dégagé entre ces interfaces de montage peut notamment accueillir un élément de véhicule 50 ayant une épaisseur inférieure à cette distance prédéterminée.

La Figure 4 montre la face extérieure de la paroi 10 de véhicule, de laquelle l'extracteur d'air fait saillie. Le boîtier 30 est visible au dos de cette face, en particulier la protrusion 37. Un élément de véhicule 60 sous la forme d'un élément de garnissage est fixé sur l'interface de montage 37a de la protrusion 37 par exemple par une vis et comprend sur sa face non visible depuis l'intérieur du véhicule une autre couche de matériau insonorisant 61.

Ainsi, l'autre élément de véhicule 50, non visible sur la figure 4, est logé dans l'espace 70 entre le boîtier 30 et l'élément de véhicule 60 et le boîtier 30 cumule la fonction d'insonorisation de l'extracteur d'air 20, de support pour les éléments de véhicule 50,60. L'élément de véhicule 60 est par exemple une garniture de coffre en plastique rigide, munie d'une ouverture permettant un flux d'air entre l'espace intérieur du véhicule et l'espace 70 situé entre l'élément de véhicule 60 et le boîtier 30.

Grâce au cumul de ces différentes fonctions, le boîtier 30 selon la présente invention permet de simplifier le montage d'un véhicule en permettant la fixation d'un ou deux éléments de véhicule tout en autorisant un haut niveau de confort, notamment sonore.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait référence aux interfaces de fixation qui ne sont pas obligatoirement des trous traversants recevant une vis ou un boulon, mais comprennent tout type d'interface de fixation connu de l'homme du métier et notamment des fixations par emboîtement (clippage) ou par collage.

En outre, le boîtier 30 peut prendre toute forme adaptée à un boîtier d'un dispositif d'insonorisation, par exemple comprendre une ou plusieurs chicanes et l'extracteur d'air 20 peut prendre toute forme adaptée pour un extracteur d'air et notamment peut comprendre d'autres éléments que des lames mobiles, par exemple un rotor, des chicanes ou une paroi perforée, comme connu de l'homme du métier.

Le dispositif d'insonorisation peut être en outre monté sur une bouche d'aération au lieu d'un extracteur d'air comme sur les figures. Ainsi, la paroi de véhicule n'est pas limitée à un élément de châssis de véhicule, mais peut également être un élément d'une planche de bord d'un véhicule, toutefois, ces exemples ne font pas partie de l'invention revendiquée. Enfin, l'élément de véhicule 60 n'est pas limité à une garniture de coffre, mais peut comprendre un tapis de coffre, un ciel de toit

## Revendications

1. Véhicule automobile comprenant un châssis pourvu d'une paroi (10) définissant une ouverture (11) et un dispositif d'insonorisation pour un flux d'air entre un intérieur et un extérieur du véhicule, le dispositif d'insonorisation comprenant :
un boîtier (30) monté sur l'ouverture (11) de la paroi (10) du véhicule,
l'ouverture (11) permettant le passage du flux d'air entre l'intérieur et l'extérieur du véhicule,
le boîtier (30) étant en outre agencé pour être traversé par ce flux d'air et pour procurer une insonorisation à l'intérieur du véhicule,
le boîtier (30) comprenant au moins une interface de montage (36a, 36b, 37a) agencée pour recevoir un élément de véhicule (60), et le dispositif comprenant un extracteur d'air (20) comportant au moins un élément mobile
(21, 22, 23) agencé pour autoriser le flux d'air en cas de surpression dans l'intérieur du véhicule, le boîtier (30) comprenant une ouverture (35) occupée par ledit extracteur d'air (20), une surface extérieure (31c) et une protrusion (37) faisant saillie de la surface extérieure (31c), une interface de montage (37a) pourvue sur ladite protrusion (37) de manière à recevoir un élément de véhicule (60), **caractérisé en ce que** l'élément de véhicule (60) est un élément de garnissage d'un intérieur de véhicule et recouvre le boîtier (30) et/ou l'extracteur d'air (20).

2. Véhicule automobile selon la revendication précédente, **caractérisé en ce que** la surface extérieure (31c) du boîtier comprend au moins une autre interface de montage (36a, 36b) agencée pour fixer au moins un autre élément de véhicule (50).

3. Véhicule automobile selon l'une quelconque des revendications précédentes, **caractérisé en ce que** le boîtier (30) comprend une couche de matériau insonorisant (40) agencée en contact avec le flux d'air.

4. Véhicule automobile selon l'une quelconque des revendications précédentes, **caractérisé en ce que** le boîtier (30) est configuré pour imposer au flux d'air un trajet non linéaire entre l'intérieur et l'extérieur du véhicule.

5. Véhicule automobile selon l'une quelconque des revendications précédentes, comprenant en outre un autre élément de véhicule (50) fixé sur l'autre interface de montage (36a, 36b).

6. Véhicule automobile selon la revendication précédente, dans lequel :
- l'interface de montage (37a) est agencée à une distance prédéterminée de l'autre interface de montage (36a, 36b)
- l'autre élément de véhicule (50) présente une épaisseur inférieure à la distance prédéterminée.

7. Véhicule automobile selon la revendication précédente, **caractérisé en ce que** l'élément de véhicule (60) recouvre le boîtier (30).

## Patentansprüche

1. Kraftfahrzeug mit einem Fahrgestell mit einer Wand (10), die eine Öffnung (11) definiert, und einer Schalldämpfungseinrichtung für einen Luftstrom zwischen einem Innenraum und einem Außenraum des Fahrzeugs, wobei die Schalldämpfungseinrichtung umfasst:
einem an der Öffnung (11) der Fahrzeugwand (10) angebrachten Gehäuse (30),
die Öffnung (11), durch die der Luftstrom zwischen dem Inneren und dem Äußeren des Fahrzeugs strömen kann,
wobei das Gehäuse (30) ferner so beschaffen ist, dass es von diesem Luftstrom durchströmt wird und eine Schalldämpfung im Fahrzeuginnern bereitstellt,
das Gehäuse (30) umfasst mindestens eine Montageschnittstelle (36a, 36b, 37a), die angeordnet ist, um ein Fahrzeugteil (60) aufzunehmen, und die Vorrichtung umfasst einen Luftabzug (20), der mindestens ein bewegliches Teil (21, 22, 23) umfasst, das angeordnet ist, um den Luftstrom im Falle eines Überdrucks im Inneren des Fahrzeugs zu ermöglichen, wobei das Gehäuse (30) eine Öffnung (35) umfasst, die von dem Luftabzug (20) eingenommen wird, wobei eine Außenfläche (31c) und ein Vorsprung (37) vorstehen von der Außenfläche (31c) eine Montageschnittstelle (37a), die an dem Vorsprung (37) so vorgesehen ist, dass sie ein Fahrzeugteil (60) aufnimmt, **dadurch gekennzeichnet, dass** das Fahrzeugteil (60) ein Packungselement eines Fahrzeuginnenraums ist und das Gehäuse (30) und/oder den Luftabzug (20) abdeckt.

2. Kraftfahrzeug nach dem vorhergehenden Anspruch, **dadurch gekennzeichnet, dass** die äußere Oberfläche (31c) des Gehäuses wenigstens eine weitere Montageschnittstelle (36a, 36b) aufweist, die angeordnet ist, um wenigstens ein weiteres Fahrzeugteil (50) zu befestigen.

3. Kraftfahrzeug nach einem der vorhergehenden Ansprüche, **dadurch gekennzeichnet, dass** das Gehäuse (30) eine Schicht aus schalldämpfendem Material (40) aufweist, die in Kontakt mit dem Luftstrom angeordnet ist.

4. Kraftfahrzeug nach einem der vorhergehenden Ansprüche, **dadurch gekennzeichnet, dass** das Gehäuse (30) so konfiguriert ist, dass es dem Luftstrom einen nichtlinearen Weg zwischen dem Inneren und dem Äußeren des Fahrzeugs vorgibt.

5. Kraftfahrzeug nach einem der vorhergehenden Ansprüche, ferner mit einem weiteren Fahrzeugteil (50), das an der weiteren Montageschnittstelle (36a, 36b) befestigt ist.

6. Kraftfahrzeug nach dem vorhergehenden Anspruch, wobei:
- die Montageschnittstelle (37a) ist in einem vorgegebenen Abstand von der anderen Montageschnittstelle (36a, 36b) angeordnet
- das andere Fahrzeugteil (50) eine Dicke aufweist, die kleiner als der vorgegebene Abstand ist.

7. Kraftfahrzeug nach dem vorhergehenden Anspruch, **dadurch gekennzeichnet, dass** das Fahrzeugteil (60) das Gehäuse (30) abdeckt.

## Claims

1. A motor vehicle comprising a chassis with a wall (10) defining an opening (11) and a soundproofing device for an air flow between an interior and an exterior of the vehicle, the soundproofing device comprising:
a housing (30) mounted on the opening (11) of the wall (10) of the vehicle,
the opening (11) allowing the passage of the air flow between the interior and exterior of the vehicle,
the housing (30) being further arranged to be traversed by this air flow and to provide soundproofing inside the vehicle,
the housing (30) comprising at least one mounting interface (36a, 36b, 37a) arranged to receive a vehicle element (60), and the device comprising an air extractor (20) comprising at least one movable element (21, 22, 23) arranged to allow the flow of air in the event of overpressure in the interior of the vehicle, the housing (30) comprising an opening (35) occupied by said air extractor (20), an outer surface (31c) and a protrusion (37) from the outer surface (31c), a mounting interface (37a) provided on said protrusion (37) so as to receive a vehicle element (60), **characterized in that** the vehicle element (60) is a trim element of a vehicle interior and covers the housing (30) and/or the air extractor (20).

2. Motor vehicle according to the preceding claim, **characterized in that** the outer surface (31c) of the casing comprises at least one other mounting interface (36a, 36b) arranged to fix at least one other vehicle element (50).

3. Motor vehicle according to any one of the preceding claims, **characterized in that** the casing (30) comprises a layer of soundproofing material (40) arranged in contact with the air flow.

4. Motor vehicle according to any one of the preceding claims, **characterized in that** the housing (30) is configured to impose on the air flow a non-linear path between the inside and the outside of the vehicle.

5. Motor vehicle according to any one of the preceding claims, further comprising another vehicle element (50) fixed to the other mounting interface (36a, 36b).

6. Motor vehicle according to the preceding claim, in which:
- the mounting interface (37a) is arranged at a predetermined distance from the other mounting interface (36a, 36b)
the other vehicle element (50) has a thickness less than the predetermined distance.

7. Motor vehicle according to the preceding claim, **characterized in that** the vehicle element (60) covers the casing (30).
